# DEMANDE DE BREVET EUROPEEN

(11) **EP 1 838 045 A1**
(43) Date de publication de la demande: **26.09.2007**
(21) Numéro de dépôt: 06300255.4
(22) Date de dépôt: 21.03.2006
(51) Int. Cl.: H04L 12/28, H04L 12/56

(54) **Serveur et méthode de gestion d'une pluralité de réseaux sans fil**

(71) Demandeur: Alcatel Lucent, 75008 Paris (FR)
(72) Inventeur: Jeannerod, Laurent, 67205 Oberhausbergen (FR)
(74) Mandataire: Sciaux, Edmond

(57) **Abrégé**

Un serveur de gestion 1 d'une pluralité de points d'accès radiofréquence 4, 5, 7, 8, 9 d'au moins deux réseaux de communication locaux sans fil PAN, WLAN, lesdits réseaux utilisant une partie commune d'une bande radiofréquence selon des protocoles de communication distincts, lesdits points d'accès radiofréquence étant couplés à un même réseau de communication local filaire WL, comporte:
- des moyens de réception 1a pour recevoir périodiquement de chaque point d'accès radiofréquence 4, 5, 7, 8, 9 respectif une donnée relative à l'occupation de la bande radiofréquence dédiée au réseau de communication local sans fil PAN, WLAN auquel ce point d'accès appartient, et
- des moyens de contrôle 1 b pour contrôler les fréquences de transmission et les puissances de transmission des points d'accès radiofréquence de telle sorte que les transmissions radiofréquences de ces points d'accès 4, 5, 7, 8, 9 n'interfèrent pas entre elles.

## Description

### DOMAINE TECHNIQUE DE L'INVENTION

L'invention se rapporte au domaine des communications entre terminaux au sein de réseaux, et plus particulièrement à la gestion automatique de la coexistence de dispositifs de communication radiofréquence utilisant une partie commune d'une bande radiofréquence selon des protocoles de communication distincts.

### ETAT DE LA TECHNIQUE ANTERIEURE

Un réseau de communication local sans fil selon la norme de communication Bluetooth a une couverture de l'ordre de la dizaine de mètre, supporte un taux de transfert de l'ordre de 1 Mbps et nécessite une puissance de fonctionnement faible. Son utilisation principale est le remplacement de câble entre des dispositifs se trouvant à proximité.

Un réseau de communication local sans fil selon la norme de communication Wi-Fi (pour Wireless Fidelity) définie dans la spécification IEEE (pour Institute of Electrical and Electronics Engineers) 802.11 b et 802.11 g a une couverture de l'ordre de la centaine de mètres, supporte un taux de transfert de l'ordre de 11 Mbps (802.11 b) et 54 Mbps (802.11 g) et nécessite une puissance de fonctionnement moyenne (en général inférieure à 100mW). Son utilisation principale est l'extension de l'accès à un réseau filaire, par exemple de type Ethernet.

La norme de communication Bluetooth ainsi que la norme de communication Wi-Fi utilisent la bande de fréquence ISM (pour Industry Scientific and Medical) centrée autour de 2.4 GHz. La norme de communication Bluetooth divise la bande de fréquence ISM en 79 canaux, chacun ayant une largeur de 1 MHz. La norme de communication Wi-Fi divise la bande de fréquence ISM en 14 canaux se chevauchant, chacun ayant une largeur de 22 MHz.

De ce fait, des signaux radiofréquences transmis selon la norme de communication Bluetooth et Wi-Fi dans une même zone de couverture, à des fréquences proches et au même moment peuvent interférer entre-eux.

Pour minimiser les interférences et assurer la coexistence de communications Wi-Fi et Bluetooth, la technique du saut de fréquence adaptatif AFH (pour Adaptive Frequency Hopping) peut être utilisée. Selon cette technique, l'algorithme AFH d'un dispositif Bluetooth change constamment de canal utilisé pour les transmissions, teste la bande de fréquence ISM, identifie les canaux soumis aux interférences, par exemple avec un dispositif Wi-Fi, et utilisent les canaux libres d'interférence.

Cependant, il est difficile de déployer et configurer des dispositifs fonctionnant selon la norme de communication Wi-Fi et Bluetooth utilisant la même bande de fréquence. La non-unification des deux normes de communication rend difficile le contrôle en temps réel de la sélection des canaux utilisés pour les communications dans une même zone de couverture. Il en résulte de nombreuses transmissions erronées, des transmissions répétées, un taux d'erreur significatif et un délai d'obtention de la convergence de l'algorithme AFH important. De ce fait, une bonne qualité des communications, par exemple de type audio, ne peut être garantie.

Le document US2005/0170776 traite du sujet de la coexistence des technologies Bluetooth et Wi-Fi. Ce document décrit un dispositif comportant un module Bluetooth et un module Wi-Fi. Un driver gère la supervision de la coexistence entre les deux modules par application d'une stratégie de planification des transmissions Bluetooth et Wi-Fi afin d'éviter les collisions. Cependant, un tel mécanisme ne peut pas être mis en oeuvre dans un réseau dans lequel coexiste des dispositifs Bluetooth d'une part et Wi-Fi d'autre part, chaque dispositif étant mono-norme de communication.

### EXPOSE DE L'INVENTION

Un but de l'invention est de proposer un serveur de gestion remédiant à au moins un des inconvénients de l'art antérieur.

Selon l'invention, le serveur de gestion centralise l'allocation de fréquence d'une pluralité de réseau de communication utilisant une partie commune d'une bande radiofréquence selon des protocoles de communication différents.

Plus précisément, la présente invention concerne un serveur de gestion d'une pluralité de points d'accès radiofréquence d'au moins deux réseaux de communication locaux sans fil, lesdits réseaux utilisant une partie commune d'une bande radiofréquence selon des protocoles de communication distincts. Les points d'accès radiofréquence sont couplés à un même réseau de communication local filaire. Le serveur de gestion comporte des moyens de réception pour recevoir périodiquement de chaque point d'accès radiofréquence respectif une donnée relative à l'occupation de la bande radiofréquence dédiée au réseau de communication local sans fil auquel ce point d'accès appartient. Le serveur de gestion comporte également des moyens de contrôle des points d'accès radiofréquence de telle sorte que les transmissions radiofréquences de ces points d'accès n'interfèrent pas entre elles.

Selon un aspect de l'invention, le premier protocole de communication peut être conforme aux spécifications Bluetooth et le deuxième protocole de communication peut être conforme aux spécifications Wi-Fi.

Selon un autre aspect de l'invention, le premier réseau de communication local sans fil est un réseau personnel de type PAN, et le deuxième réseau de communication local sans fil est un réseau local de type WLAN. La zone de couverture du premier réseau de communication est inférieure à celle du deuxième réseau.

Avantageusement, le serveur de gestion est relié à la pluralité de points d'accès radiofréquence par un lien filaire.

L'invention concerne également une méthode de gestion d'une pluralité de points d'accès radiofréquence d'au moins deux réseaux de communication locaux sans fil, lesdits réseaux utilisant une partie commune d'une bande radiofréquence selon des protocoles de communication distincts. La méthode de gestion comporte les étapes suivantes:
- une étape de réception consistant à recevoir périodiquement de chaque point d'accès radiofréquence respectif une donnée relative à l'occupation de la bande radiofréquence dédiée au réseau de communication local sans fil auquel ce point d'accès appartient, et
- une étape de contrôle consistant à contrôler les fréquences de transmission et les puissances de transmission des points d'accès radiofréquence de telle sorte que les transmissions radiofréquences de ces points d'accès n'interfèrent pas entre elles.

Selon un aspect de la méthode selon l'invention, l'étape de réception peut consister en outre à recevoir périodiquement de chaque point d'accès radiofréquence appartenant à un réseau de communication sans fil conforme aux spécifications "Bluetooth", des données relatives aux taux d'erreur, à la puissance de signaux radiofréquences reçus ou du rapport signal interférence, lesdites données étant déterminées par chaque point d'accès radiofréquence ou par un terminal sans fil.

L'invention concerne également un produit programme d'ordinateur destiné à être chargé dans une mémoire d'un serveur de gestion, le produit programme d'ordinateur comportant des portions de code de logiciel mettant en oeuvre la méthode de gestion selon l'invention lorsque le programme est exécuté par le serveur de gestion.

Enfin, l'invention concerne une installation de communication comportant une pluralité de points d'accès radiofréquence appartenant à au moins deux réseaux de communication locaux sans fil, lesdits réseaux utilisant une partie commune d'une bande radiofréquence selon des protocoles de communication distincts, lesdits points d'accès radiofréquence étant couplés à un même réseau de communication local filaire. L'installation de communication comporte un serveur de gestion selon l'invention relié à la pluralité de points d'accès radiofréquence par un lien filaire.

Avec l'invention, il est possible de déployer simultanément un réseau de communication personnel sans fil WPAN de type Bluetooth et un réseau de communication local sans fil WLAN de type Wi-Fi. L'invention permet de gérer la configuration des deux systèmes et ainsi de garantir un niveau de qualité satisfaisant pour les utilisateurs de dispositifs de type Bluetooth.

L'invention rend également possible une mise à jour et une convergence plus rapide de l'algorithme AFH lorsqu'il est employé. De ce fait une meilleure qualité, par exemple pour les applications audio, est obtenue au bénéfice des utilisateurs.

### DESCRIPTION DES FIGURES

La présente invention est illustrée par des exemples non limitatifs sur les Figures jointes, dans lesquelles des références identiques indiquent des éléments similaires:
La Figure 1 est une représentation schématique d'une installation de communication selon l'invention; et
La Figure 2 est un diagramme illustrant les échanges de messages entre les différents éléments du réseau représentés à la Figure 1, à savoir un dispositif mobile, un point d'accès d'un réseau de communication personnel, un serveur de gestion et un point d'accès d'un réseau de communication local sans fil.

### DESCRIPTION DETAILLEE DE L'INVENTION

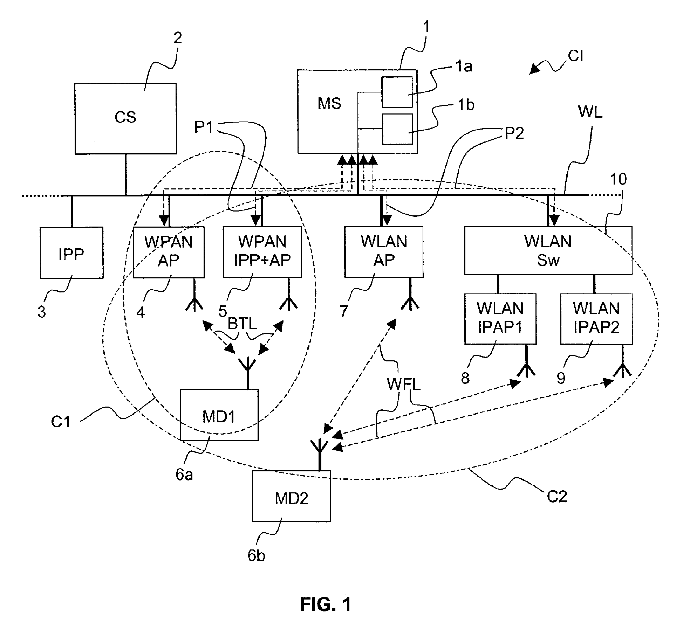

La Figure 1 représente schématiquement une installation de communication selon l'invention.

L'installation de communication Cl comporte un serveur de gestion 1, un serveur d'appel 2, un téléphone utilisant le protocole Internet 3 (téléphone IP), un réseau de communication personnel sans fil (Wireless Personal Area Network ou WPAN), un réseau de communication local sans fil (Wireless Local Area Network ou WLAN) et des terminaux de communication sans fil 6a, 6b.

Les terminaux de communication sans fil 6a, 6b sont des appareils multifonctions portables ou mobiles, par exemple un micro-ordinateur personnel PC, un assistant personnel PDA, un téléphone portable, un terminal de transaction bancaire, un casque, ou un combiné, etc...

Le téléphone IP 3 est couplé par un lien filaire WL, par exemple du type Ethernet, au serveur d'appel 2. Ceci constitue une architecture standard d'un réseau de téléphonie par Internet.

Le réseau de communication personnel sans fil WPAN comporte un point d'accès WPAN 4, un téléphone IP intégrant un point d'accès WPAN 5 et au moins un premier terminal de communication sans fil 6a. Le point d'accès WPAN 4 et le téléphone IP intégrant un point d'accès WPAN 5 sont couplés par un lien Ethernet filaire WL au serveur de gestion 1 et au serveur d'appel 2. Par exemple, le réseau de communication personnel WPAN est un réseau de communication sans fil conforme aux spécifications Bluetooth. Le point d'accès WPAN 4, le téléphone IP intégrant un point d'accès WPAN 5 et le terminal de communication sans fil 6a incorporent un dispositif d'interface réseau radiofréquence conforme aux spécifications Bluetooth (symbolisé par une antenne sur la Figure 1). A titre d'exemple, le terminal de communication sans fil 6a, lorsqu'il s'agit d'un micro-ordinateur personnel portable, peut comporter une carte réseau amovible enfichée sur un port du micro-ordinateur jouant le rôle d'interface réseau radiofréquence. Il peut également s'agir d'un module de communication Bluetooth intégré à la carte mère du PDA, au casque, etc.... De cette manière, le premier terminal de communication sans fil 6a peut être couplé avec le point d'accès WPAN 4 ou le téléphone IP intégrant un point d'accès WPAN 5 par un lien radiofréquence de type Bluetooth BTL. Cette communication n'est possible que dans la mesure où le terminal de communication sans fil 6a se trouve placé dans la zone de couverture C1 du point d'accès WPAN 4 ou du téléphone IP intégrant un point d'accès WPAN 5 du réseau de communication personnel WPAN. Typiquement, la zone de couverture C1 du réseau de communication personnel sans fil WPAN conforme aux spécifications Bluetooth est de l'ordre de la dizaine de mètres autour du point d'accès 4 ou du téléphone IP 5.

Les trames P1 échangées entre le serveur de gestion 10 et le point d'accès WPAN 4 ou 5 peuvent être encapsulées selon le protocole HTTP (pour Hyper Text Transfer Protocol) afin de faciliter leurs transmissions par l'intermédiaire des routeurs des points d'accès. Le dispositif d'interface radio d'un premier terminal de communication sans fil 6a, respectivement d'un point d'accès WPAN 4, 5 étiquette puis encapsule les trames dans des trames radio conforme aux spécifications Bluetooth avant leurs transmissions vers un autre dispositif d'interface radio d'un point d'accès WPAN 4, 5, respectivement d'un premier terminal de communication 6a.

Le réseau de communication local sans fil WLAN comporte un premier point d'accès WLAN 7, un premier point d'accès IP 8 et un second point d'accès IP 9, et au moins un second terminal de communication sans fil 6b. Le premier point d'accès IP 8 et le second point d'accès IP 9 sont reliés à un commutateur 10. Le premier point d'accès WLAN 7 et le commutateur 10 sont couplés par le lien filaire WL au serveur de gestion 1 et au serveur d'appel 2. Par exemple, le réseau de communication local WLAN est un réseau de communication sans fil conforme aux spécifications Wi-Fi (norme IEEE 802.11 b ou 802.11 g). Le premier point d'accès WLAN 7, le premier 8 et second 9 point d'accès IP et le terminal de communication sans fil 6b incorporent un dispositif d'interface réseau radiofréquence conforme aux spécifications Wi-Fi (symbolisé par une antenne sur la Figure 1). Le dispositif d'interface réseau peut être une carte réseau amovible enfichée sur un port du terminal ou un module de communication Wi-Fi intégré à la carte mère du terminal. De cette manière, le second terminal de communication sans fil 6b peut être couplé avec les points d'accès 7, 8 ou 9 par un lien radiofréquence de type Wi-Fi WFL. Cette communication n'est possible que dans la mesure où le terminal de communication sans fil 6b se trouve placé dans la zone de couverture C2 du premier point d'accès WLAN 7, du premier 8 ou du second 9 point d'accès IP du réseau de communication local WLAN. Typiquement, la zone de couverture C2 du réseau de communication local sans fil WLAN conforme aux spécifications Wi-Fi est de l'ordre de la centaine de mètres autour d'un point d'accès WLAN7,8ou9.

Les trames P2 échangées entre le serveur de gestion 1 et les points d'accès WLAN 7, 8 ou 9, le cas échéant via le commutateur 10, peuvent être encapsulées selon le protocole HTTP afin de faciliter leurs transmissions par l'intermédiaire des routeurs des points d'accès. Le dispositif d'interface radio d'un second terminal de communication sans fil 6b, respectivement d'un point d'accès WLAN 7, 8, 9 étiquette puis encapsule les trames dans des trames radio conforme aux spécifications Wi-Fi avant leurs transmissions vers un autre dispositif d'interface radio d'un point d'accès WLAN 7, 8, 9, respectivement d'un second terminal de communication 6b.

Le serveur de gestion 1 comporte notamment des moyens de réception 1 a et des moyens de contrôle 1b. Les moyens de réception 1 a reçoivent périodiquement de chaque point d'accès du réseau PAN 4 et 5, ainsi que du réseau WLAN 7, 8 et 9 des données relatives à l'occupation de la bande radiofréquence dédiée au réseau de communication local sans fil auquel ce point d'accès appartient. Plus précisément, les point d'accès du réseau PAN 4 et 5 envoient des données relatives à l'occupation de la bande radiofréquence du réseau de communication personnel sans fil PAN de type Bluetooth, et les point d'accès du réseau de communication local sans fil WLAN 7, 8 et 9 envoient des données relatives à l'occupation de la bande radiofréquence du réseau WLAN de type Wi-Fi. Sur la base de ces données reçues, les moyens de contrôle 1 b contrôlent les fréquences de transmission et les puissances de transmission des points d'accès radiofréquence de sorte que les transmissions radiofréquence des différents points d'accès n'interfèrent pas entre elles.

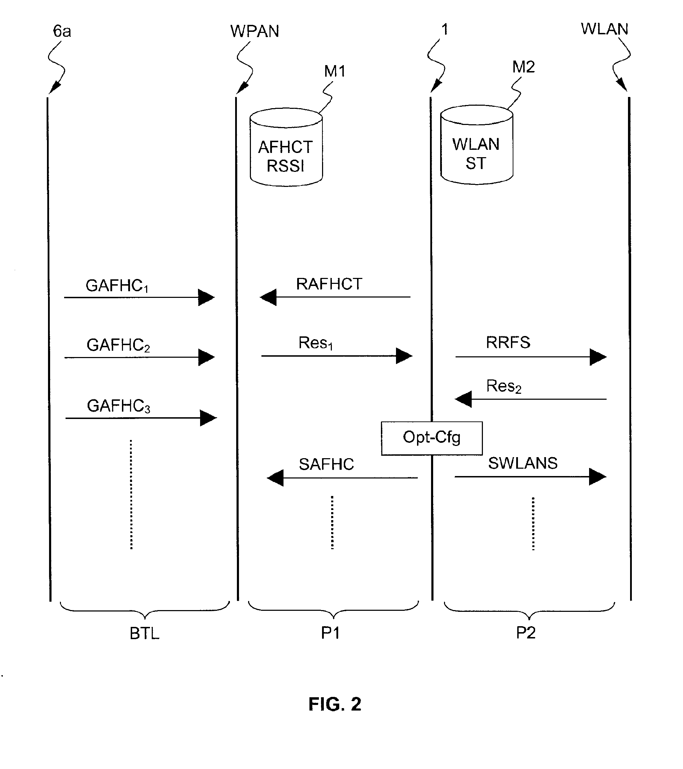

L'interaction du serveur de gestion 1 et des différents points d'accès des réseaux de communication de communication sans fil personnel PAN et local WLAN va maintenant être expliqué plus en détail en relation avec la Figure 2.

La Figure 2 est un diagramme représentant les échanges de trames de données entre les différents éléments du réseau de communication selon l'invention, c'est-à-dire le premier terminal de communication sans fil 6a, le réseau de communication personnel sans fil WPAN, le serveur de gestion 1 et le réseau de communication local sans fil WLAN (de gauche à droite sur la Figure 2).

Le réseau de communication personnel sans fil WPAN, par exemple le point d'accès ou le téléphone IP muni d'un point d'accès, comporte une première mémoire M1. La première mémoire M1 comprend des données relatives à une table de classification AFH (Adaptive Frequency Hopping) pour les communications selon le protocole Bluetooth. Elle comprend également des données relatives à des indicateurs du taux d'erreur, de la puissance des signaux radiofréquences reçus ou du rapport signal interférence (valeurs RSSI pour Received Signal Strength Indicator) déterminées par le point d'accès et le terminal de communication sans fil.

Le serveur de gestion 1 comporte une seconde mémoire M2. La seconde mémoire M2 comprend des données relatives à des réglages du réseau de communication local sans fil WLAN. Par exemple, ces données relatives à des réglages concernent notamment la distribution des canaux radiofréquence et la puissance de transmission.

Les points d'accès 4, 5 du réseau de communication personnel WPAN reçoivent régulièrement du terminal de communication sans fil 6a des messages GAFHC₁, GAFHC₂, GAFHC₃, etc... (messages de type LMP pour Link Management Protocol) comportant la classification AFH et les valeurs RSSI mesurées par le terminal de communication sans fil 6a.

Le serveur de gestion 1 initie les étapes suivantes.

D'une part, le serveur de gestion 1 envoie un message RAFHCT demandant la table de classification AFH et les valeurs RSSI en direction des points d'accès 4, 5 du réseau de communication personnel WPAN. Chaque point d'accès renvoie au serveur de gestion un message Res₁ comportant la table de classification construite par le point d'accès 4, 5, ainsi que les valeurs RSSI mesurées par le point d'accès 4, 5 et par le terminal de communication sans fil 6a.

D'autre part, le serveur de gestion 1 envoi un message RRFS demandant des informations concernant l'état de l'occupation des canaux de la bande de fréquence du réseau de communication local sans fil WLAN en direction des points d'accès WLAN 7, 8 et 9. Chaque point d'accès renvoie au serveur de gestion un message Res₂ comportant l'état de l'occupation des canaux de la bande de fréquence du réseau de communication local sans fil WLAN.

Le serveur de gestion 1 détermine Opt-Cfg une configuration optimale sur la base d'une part de la table de classification AFH et/ou des différentes valeurs RSSI du réseau de communication personnel sans fil WPAN, et/ou d'autre part de l'état de l'occupation des canaux de la bande de fréquence du réseau de communication local sans fil WLAN.

Ensuite, le serveur de gestion envoie un premier message SAFHC définissant la classification AFH et la puissance de transmission optimale en direction du point d'accès et du téléphone IP intégrant un point d'accès du réseau de communication personnel WPAN. Le serveur de gestion envoie également un second message SWLANS définissant les réglages optimums du réseau de communication local sans fil WLAN en direction du premier point d'accès WLAN 7, du premier 8 et du second 9 point d'accès IP.

Avantageusement, les différentes étapes mentionnées ci-dessus sont ensuite répétées de manière régulière.

Alternativement, les différentes étapes mentionnées ci-dessus ne sont répétées que lorsqu'un terminal de communication sans fil se trouve placé dans la zone de couverture d'un réseau de communication sans fil et que ce terminal de communication sans fil souhaite établir une liaison avec ce réseau. Dans ce cas, le terminal de communication sans fil peut transmettre au point d'accès une requête de connexion, laquelle est transmise au serveur de gestion par l'intermédiaire d'un point d'accès.

Ainsi, l'invention facilite le déploiement et la configuration de réseaux de communication fonctionnant selon la norme de communication Wi-Fi et Bluetooth et dont les zones de couverture respectives se chevauchent. Le contrôle en temps réel de la sélection des canaux et des puissances utilisés pour les communications dans une même zone de couverture est rendu possible. Ceci assure notamment une convergence rapide de l'algorithme AFH. De ce fait, une bonne qualité des communications de type audio peut être assurée pour les utilisateurs.

### REMARQUES FINALES

Les moyens de réception et moyens de contrôle du serveur de gestion selon l'invention peuvent être réalisés sous la forme de circuits électroniques, de modules logiciels ou informatiques, ou d'une combinaison de circuits électroniques et de modules logiciels.

Les figures et leurs descriptions faites ci-dessus illustrent l'invention plutôt qu'elles ne la limitent. En particulier, l'invention et ses différentes variantes viennent d'être décrites en relation avec des exemples particuliers d'application, utilisant la bande de fréquences ISM et des protocoles de communication normalisés. Néanmoins, il est évident pour un homme du métier que l'invention peut être étendue afin de gérer la coexistence avec d'autres applications standards ou non standards utilisant la même bande de fréquences ISM, par exemple des applications de type DECT-ISM (pour Digital Enhanced Cordless Telecommunications), ou des applications basées sur des protocoles de communication propriétaires, ou étendu à d'autres bandes de fréquences partagées.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Un serveur de gestion (1) d'une pluralité de points d'accès radiofréquence (4, 5, 7, 8, 9) d'au moins deux réseaux de communication locaux sans fil (PAN, WLAN), lesdits réseaux utilisant une partie commune d'une bande radiofréquence selon des protocoles de communication distincts, lesdits points d'accès radiofréquence étant couplés à un même réseau de communication local filaire (WL),
ledit serveur de gestion (1) est **caractérisé en ce qu'**il comporte:
- des moyens de réception (1a) pour recevoir périodiquement de chaque point d'accès radiofréquence (4, 5, 7, 8, 9) respectif une donnée relative à l'occupation de la bande radiofréquence dédiée au réseau de communication local sans fil (PAN, WLAN) auquel ce point d'accès appartient, et
- des moyens de contrôle (1 b) pour contrôler les fréquences de transmission et les puissances de transmission des points d'accès radiofréquence de telle sorte que les transmissions radiofréquences de ces points d'accès (4, 5, 7, 8, 9) n'interfèrent pas entre elles.

2. Un serveur de gestion selon la revendication 1, dans lequel un premier protocole de communication est conforme aux spécifications "Bluetooth".

3. Un serveur de gestion selon la revendication 1 ou 2, dans lequel un deuxième protocole de communication est conforme aux spécifications "Wi-Fi".

4. Un serveur de gestion selon l'une des revendications précédentes, dans lequel un premier réseau de communication local sans fil est un réseau personnel de type PAN, un deuxième réseau de communication local sans fil est un réseau local de type WLAN, le premier réseau de communication ayant une zone de couverture (C1) inférieure à celle (C2) du deuxième réseau.

5. Un serveur de gestion selon l'une des revendications précédentes, dans lequel le serveur de gestion (1) est relié à la pluralité de points d'accès radiofréquence (4, 5, 7, 8, 9) par un lien filaire (WL).

6. Une méthode de gestion d'une pluralité de points d'accès radiofréquence d'au moins deux réseaux de communication locaux sans fil, lesdits réseaux utilisant une partie commune d'une bande radiofréquence selon des protocoles de communication distincts, lesdits points d'accès radiofréquence étant couplés à un même réseau de communication local filaire,
ladite méthode de gestion est **caractérisée en ce qu'**elle comporte les étapes suivantes:
- une étape de réception consistant à recevoir périodiquement de chaque point d'accès radiofréquence respectif une donnée relative à l'occupation de la bande radiofréquence dédiée au réseau de communication local sans fil auquel ce point d'accès appartient, et
- une étape de contrôle consistant à contrôler les fréquences de transmission et les puissances de transmission des points d'accès radiofréquence de telle sorte que les transmissions radiofréquences de ces points d'accès n'interfèrent pas entre elles.

7. Une méthode de gestion selon la revendication précédente, pour laquelle l'étape de réception consiste en outre à recevoir périodiquement de chaque point d'accès radiofréquence appartenant à un réseau de communication sans fil conforme aux spécifications "Bluetooth", des données relatives aux taux d'erreur, à la puissance de signaux radiofréquences reçus ou du rapport signal interférence, lesdites données étant déterminées par chaque point d'accès radiofréquence (4, 5) ou par un terminal sans fil (6a).

8. Un produit programme d'ordinateur destiné à être chargé dans une mémoire d'un serveur de gestion, le produit programme d'ordinateur comportant des portions de code de logiciel mettant en oeuvre la méthode de gestion selon la revendication 6 ou 7 lorsque le programme est exécuté par le serveur de gestion.

9. Une installation de communication (Cl) comportant une pluralité de points d'accès radiofréquence (4, 5, 7, 8, 9) appartenant à au moins deux réseaux de communication locaux sans fil (PAN, WLAN), lesdits réseaux utilisant une partie commune d'une bande radiofréquence selon des protocoles de communication distincts, lesdits points d'accès radiofréquence étant couplés à un même réseau de communication local filaire (WL), l'installation de communication (Cl) est **caractérisée en ce qu'**elle comporte un serveur de gestion (1) selon l'une des revendications 1 à 5 relié à la pluralité de points d'accès radiofréquence (4, 5, 7, 8, 9) par un lien filaire (WL).
